# EUROPEAN PATENT SPECIFICATION

(11) **EP 1 978 739 B1**
(45) Date of publication and mention of the grant of the patent: **30.05.2018**
(21) Application number: 07007197.2
(22) Date of filing: 05.04.2007
(51) Int. Cl.: H04N 7/16, H04N 5/445

(54) **Method and display apparatus for providing flexible access to additional information to a visual stream of main information**
Verfahren und Anzeigevorrichtung zur Bereitstellung von flexiblem Zugang auf Zusatzinformation zu einem visuellen Strom von Hauptinformation
Procédé et appareil d'affichage pour fournir un accès flexible aux informations supplémentaires vers le flux visuel d'informations principales

(43) Date of publication of application: 08.10.2008
(73) Proprietor: Nokia Solutions and Networks Oy, 02610 Espoo (FI)
(72) Inventor: Willekens, Marc, 2250 Kontich (BE)
(74) Representative: Borgström, Markus

(56) References cited:
- WO-A1-01/11874
- US-A1- 2002 129 365
- US-A1- 2002 188 959
- US-A1- 2003 022 622
- US-A1- 2005 177 861

## Description

### Field of the invention

The present invention relates to the field of providing flexible access to additional information to a visual stream of main information. Particularly, the present invention relates to a method and a display apparatus for providing additional information to a movie displayed on a screen and a computer program product for performing the method and a computer-readable medium having such computer program product stored thereon.

### Art background

The document US2002/129365 A1 (KIM JOON-HWAN [KR] ET AL) 12 September 2002 (2002-09-12) describes an apparatus and a method for processing a data broadcast signal, wherein additional information contained in a TV broadcast signal can be easily selected and acquired without a time limit by using a still picture. Additional information corresponding to the still picture from additional information transmitted in real time with a moving picture broadcast program is processed, and the additional information is stored, together with still picture information matched with the additional information, so that an object of the additional information included in the moving picture or a picture swiftly changing can be accurately selected from the still picture without a time limit.

The document WO 01/11874 A1 (INTEL CORP [US]; LORTZ VICTOR B [US]) 15 February 2001 (2001-02-15) describes coordination of the display of an incoming signal stream (such as broadcast TV content or streaming web content) on a display with web browsing. The method includes storing a uniform resource locator (URL) associated with the incoming signal stream being displayed, receiving a first signal to display web content associated with the URL, pausing display of the incoming signal stream while storing the incoming signal stream on a storage device, and obtaining and displaying the web content associated with the URL.

The document US 2005/177861 A1 (MA YUE [US] ET AL] 11 August 2005 (2005-08-11) describes a system for seamless synchronization through asynchronous integration of Internet content with broadcast content within a portable handheld device, such as a remote control or personal digital assistant (PDA). The handheld device receives program-related data from the television while the user is watching a program. The program-related data places the handheld device in sync with the program the user is watching and augments the user's enjoyment of the program by providing supplemental broadcast information or additional interactive features.

The document US2002/129365 A1 (KIM JOON-HWAN [KR] ET AL) 12 September 2002 (2002-09-12) describes an apparatus and a method for processing a data broadcast signal, wherein additional information contained in a TV broadcast signal can be easily selected and acquired without a time limit by using a still picture. Additional information corresponding to the still picture from additional information transmitted in real time with a moving picture broadcast program is processed, and the additional information is stored, together with still picture information matched with the additional information, so that an object of the additional information included in the moving picture or a picture swiftly changing can be accurately selected from the still picture without a time limit.

The document WO 01/11874 A1 (INTEL CORP [US]; LORTZ VICTOR B [US]) 15 February 2001 (2001-02-15) describes coordination of the display of an incoming signal stream (such as broadcast TV content or streaming web content) on a display with web browsing. The method includes storing a uniform resource locator (URL) associated with the incoming signal stream being displayed, receiving a first signal to display web content associated with the URL, pausing display of the incoming signal stream while storing the incoming signal stream on a storage device, and obtaining and displaying the web content associated with the URL.

US 2002/0129365 A1 concerns an apparatus and method for processing additional information in a data broadcast system enabling easy selection of the additional information using a still picture.

WO 01/011847 A1 addresses integrating broadcast television pause and web browsing,
Current concepts for displaying e.g. a movie such as for example, for the digital TV are still TV-centric, i.e. the TV screen is seen as the main information screen for media consumption. Especially with the digital TV, new interactivity features are added which require certain "human TV interaction" (HTI) for the "additional content presentation" (ACP). Today, different systems exist which allow additional information to be shown, e.g. overlay, replacing the main content screen, as separate window on the screen, as picture in picture, etc. Different additional content may be available such as EPG (Electronic Program Guide), teletext, a separate TV channel, view the same movie from different view points, etc. Current state of technology may allow for direct access to additional streaming information by switching the channel or by viewing two channels at once via a picture-in-picture (pip) approach.

One of the main problems with all the new digitally provided information is the user being overwhelmed with additional, mostly unrelated content which intrudes and distracts the user from the main topic or task. This can be observed from many new digital TV standards and from different approaches proposing different methods for pushing and pulling additional information/content, related or not related to the TV program towards the user for media consumption. Recent studies describe the danger of many information interruptions as "the continual partially interrupted state" (CPIS). The "cluttered TV screen" distracts the users and makes it difficult for them to focus on the main content.

In state-of-the-art methods for consumption of additional information, time-shifting approaches are described which allow for example a pause of the main content and the additional meta-data or a pause of the main content and a consumption of the additional meta-data related to the main content at that moment in time. However, in both cases, the user is distracted from the main information content flow, i.e. there is a disruption in the main content information consumption in favour of the additional data consumption. For one user watching the TV, this may be acceptable, but it will give more problems when different users are watching the same program on the TV screen.

There may be a need for a method and an apparatus which allows more flexible access to additional information provided to a main content stream of information. Furthermore, there may be a need to provide mechanisms to avoid the CPIS and to give the user more control in the consumption of additionally provided information. Ideally, the user shall be able to control when and how additional information related to a certain main program can be consumed and, preferably, on which device. Furthermore, to allow the generation of more additional content, the approach should be open to independent service providers which should be able to deliver their content by other means than the main content.

### Summary of the invention

This need may be met by the subject-matter according to the independent claims. Advantageous embodiments of the present invention are described in the dependent claims.

This invention is based on the idea of providing a more flexible access to additional information to a visual stream of main information by providing the possibility of "setting aside" this additional information for consumption at a later moment in time with or without a pause of the main content while still referring to the corresponding frame of the main information content. Therein, the approach allows a presentation of this additional information on a TV screen or, optionally, on other output devices without disturbing the main content stream. Accordingly, an end user may be given more control on the selection of additional information content and how, when and where this additional information will be consumed.

In the following, further features, advantages and embodiments of the method according to the first aspect will be described in detail.

In the context of this application, "additional information" can be any kind of information to be provided to a user when viewing a visual stream of main information. For example, the additional information can be visually displayed, e.g. as text or images, or it can be provided as audible information.

Herein, "a visual stream of main information" can be understood as any visual stream of main information such as a movie, a feature film, a documentary film, news broadcast, etc. which can be provided via various sources such as e.g. via TV broadcast channels, Internet, DVD media, video on demand (VoD), etc.

The movie can be displayed on any kind of screen. For example, a TV screen of 4:3 screen format or of 16:9 screen format can be used. Alternatively, TV screens or computer screens of different formats and with different resolutions can be used.

During displaying the movie on the screen, it can be continuously determined whether additional information is available for a specific portion of the visual stream of main information currently displayed. Herein, the "specific portion" can be both, a time portion of the visual stream of main information, i.e. for example a certain sequence of images of a movie during a predetermined duration within the movie or a spatial portion of the movie, i.e. for example a certain cutout of an image of the movie for which additional information is to be provided. The determining of the existence of additional information can be performed automatically. For example, a system performing the method of the invention can continuously check for the existence of additional information provided for a specific portion of a movie currently displayed while displaying the movie on the screen.

When it is determined, that additional information is available for a specific portion of the visual stream of main information, an indicator can be provided indicating to the end user the existence of such additional information. Any kind of indicator can be used. For example, according to one embodiment, the indicator can be provided as a visual signal such as a coloured symbol displayed on the screen. Therein, the indicator may be preferably displayed in a peripheral part of the screen such as for example in a corner of the screen. Alternatively, according to another embodiment, the indicator may be provided as an audible signal such as a short beep.

Informed of the presence of additional information by the indicator, a user can then decide whether the additional information shall be presented immediately, whether he wants to delay the presentation of the additional information or whether the additional information shall be discarded. Based on the user's choice, the additional information may be presented immediately for example by displaying it on the same screen as the visual stream of main information or on an additional screen or the information can be stored for a later use.

According to a further embodiment, the additional information is displayed in a predetermined portion of the screen upon the user's choice for presenting the additional information immediately. Therein, the information may be displayed by overlaying it to the visual stream of main information within the predetermined portion of the screen. Accordingly, while no additional information is displayed, the entire screen can be used for displaying the visual stream of main information. However, when additional information is displayed within the predetermined portion of the screen, the visual stream of main information is hidden in this portion of the screen while displaying the additional information.

According to another embodiment, the screen is divided in sub-divisions and the screen size of the visual stream of main information is resized to be displayed in one sub-division and the additional information is displayed in another sub-division. For example, a predetermined area on the screen can be reserved for the presentation of additional information. As long as there is no additional information available, this predetermined portion of the screen can remain unused and may be kept e.g. black or the total screen is used for the visual stream of main information, depending on the users configuration. When a system determines that there is additional information available for a specific portion of the visual stream of main information currently displayed, this is indicated to the user and upon his choice, submitted for example by a remote control, the additional information is immediately displayed within the reserved area. Accordingly, displaying the additional information does not hide any part of the visual stream of main information displayed in the separate subdivision of the screen. On the other side, the screen size in which the visual stream of main information is displayed is permanently reduced. It is to be noted that there may be more than two sub-divisions wherein a plurality of sub-divisions may be provided for displaying various additional information contents.

According to another embodiment, the additional information is output on a separate output device upon the user's choice for presenting the additional information immediately or later. For example, the additional information may have a format which could also be transferred to a more limited, personalized device so that the personal consumption of the additional information does not disrupt other watchers of a main TV screen.

According to a further embodiment, a first data signal providing the visual stream of main information and a second data signal providing the additional information are provided via separate supply channels. For example, a movie as a main program can be distributed via broadcast and/or via VoD methods. The same may be true for the additional information but the distribution route may be different, e.g. the main program may be supplied via satellite and the additional information may be supplied via an independent service, e.g. via an Internet connection (broadband or small band). The distributed content of additional information may be stored on the end user device such as a TV system in a file system for example on a flash card, in internal memory, on a hard disk or stored in the network. Different methods and mechanisms may be provided to allow the generation of additional information content for different media sources and technologies such as for example analogue TV broadcast channels, digital TV broadcast channels, media on DVD and video on demand (VoD) media. Both, the main content provider and/or an independent service provider may provide the additional information.

For digital TV formats, a "tagging" concept exists which can be used to indicate the location within the visual stream of main information, i.e., the specific portion of the visual stream of main information currently displayed, where additional information is made available.

However, this method can not be used by independent service providers, for analogue TV channels and/or for existing DVDs. Therefore, according to another embodiment, the invention provides another method to bring more flexibility for consuming added information wherein the data signal of the visual stream of main information is an analogue signal and wherein the data signal of the additional information further comprises image data of an image of the visual stream of main information for which image additional data is to be provided and wherein the step of determining whether additional information is available for a specific portion of the visual stream of main information currently displayed includes comparing the data signal of the visual stream of main information currently displayed with the image data included in the data signal of the additional information.

In other words, a "still picture" is provided from the location in the visual stream of main information where additional information will be made available. This still picture is also used to define the different "action zones" linked to the additional information, e.g. an action zone at a specific spatial portion of a picture of the movie. For analogue TV and/or for untagged digital content, this "still picture" may be used for "frame picture mapping" to relate the additional content with the corresponding frames of the main content, i.e. e.g. the movie. This still picture or tagging picture may have the same format and resolution as the main content and maybe stored in a "compare buffer" in the end-user's equipment (STB - settop box or media centre device) to allow for a hardware-based real-time comparison of the main content with the "tagging picture". This "tagging picture" and the additional information data may be meta-data as described above, which can be provided by different channels.

Another aspect of the present invention is directed to a display apparatus adapted to perform the method as outlined above.

According to an embodiment, such display apparatus may include a screen and a receiver wherein the receiver is adapted to receive both a visual stream of main information data signal and an additional information data signal. On the screen, both the main content, namely e.g. a movie, and, if available, the additional information may be displayed. The receiver may be adapted to receive the visual stream of main information data signal and the additional information data signal in a parallel way, i.e. both signals are received simultaneously. Alternatively, the receiver may receive the visual stream of main information data signal and the additional information data signal in a serial way, i.e. one after the other, wherein one of the signals may be stored in a separate memory for later use. Furthermore, the receiver may be adapted to receive both the visual stream of main information data signal and an additional information data signal via the same channel such that the receiver comprises only one port to receive such data signals.

According to another embodiment, the receiver comprises separate ports for receiving the visual stream of main information data signal and the additional information data signal. For example, the visual stream of main information data signal may be a conventional TV broadcast signal supplied to the display apparatus via a first port whereas the additional information data signal may be supplied to the display apparatus from another source via a second port.

According to another embodiment, the display apparatus further comprises a data output port for transmitting the additional information to an external output device. Accordingly, the display apparatus may receive the additional information data signal together with the visual stream of main information data signal via one or more input ports. Then, the visual stream of main information can be displayed on the screen of the display apparatus and a determining unit determines whether additional information is available for a specific portion of the visual stream of main information currently displayed. If so, an indicator for the availability of such additional information is provided and, upon the user's choice, the additional information may be displayed on the screen or may be output via the data output port to the external output device. Herein, the external output device can be any device adapted to output the additional information for example in a visual or acoustical way such as for example a separate display device, a mobile phone, a computer, etc.

According to another embodiment, the display apparatus further comprises an input device for receiving the user's choice concerning the temporal or spatial provision of additional information. Such input device may be hardwired or wirelessly connected to the display apparatus. For example, the input device can be a remote control of the display apparatus such as e.g. a TV apparatus, the remote control having, additionally to conventional remote control buttons, additional buttons for controlling the provision of the additional information.

It has to be noted that embodiments of the invention are described with reference to different subject-matters. In particular, some embodiments are described with reference to method type claims whereas other embodiments are described with reference to apparatus type claims. A person skilled in the art will gather from the above and the following description that, unless other notified, in addition to any combination of features belonging to one type of subject-matter also any combination between features relating to the different subject-matters, in particular between features of the apparatus type claims and features of the method type claims, is considered to be disclosed with this application.

The aspects and embodiments defined above and further aspects and embodiments, features and advantages of the present invention can be derived from the examples of embodiments described hereinafter.

The invention will be described in more detail hereinafter with reference to examples of embodiments but to which the invention is not limited.

### Brief description of the drawings

Fig. 1 schematically shows a display apparatus according to an embodiment of the present invention;
Figures 2a to 2c show examples for a possible screen layout which can be used in accordance with an embodiment of the present invention.

### Detailed description of preferred embodiments

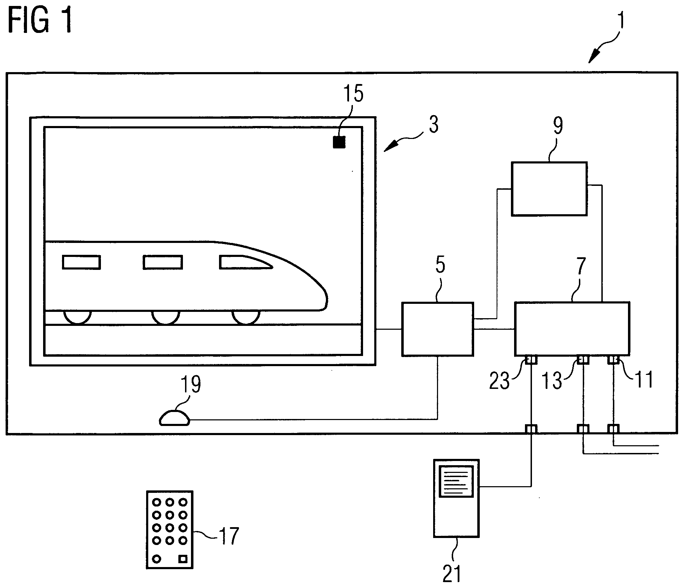

In Fig. 1, a display apparatus 1 for performing a method for providing flexible access to additional information to a movie according to an embodiment of the present invention is schematically shown. The display apparatus 1 comprises a screen 3, a control unit 5, a receiver 7 and a memory 9. An analogue TV broadcast signal including movie data signals can be provided via a first input port 11 to the receiver 7. An information data signal from a separate source such as for example an Internet source or a DVD player can be provided to the receiver 7 via a second input port 13. The receiver 7 transmits the received signals to the control unit 5. Therein, the movie data signal is further transmitted to the screen 3. While displaying the movie on the screen 3 the control unit 5 continuously determines whether there is additional information available for a specific portion of the movie currently displayed on the screen 3. When such additional information is available, the control unit 5 generates an indicator signal for displaying an indicator 15 in the form of e.g. a red square in the upper right corner of the screen.

For example when a train is displayed in the movie, there may be provided additional information for example providing information to the train, a time schedule or a map of a train station. Upon presence of such additional information, the red square indicator 15 is displayed on the screen 3 where upon a user can select, for example via his remote control 17 which is infrared coupled to an infrared receiver 19 connected to the control unit 5, whether the additional information is to be displayed immediately or is to be stored within memory 9 for later use. When the additional information is to be displayed, it can be displayed in specified portions of the screen 3 or it can be displayed on a separate output device 21 which can be connected to the receiver 7 via an output port 23.

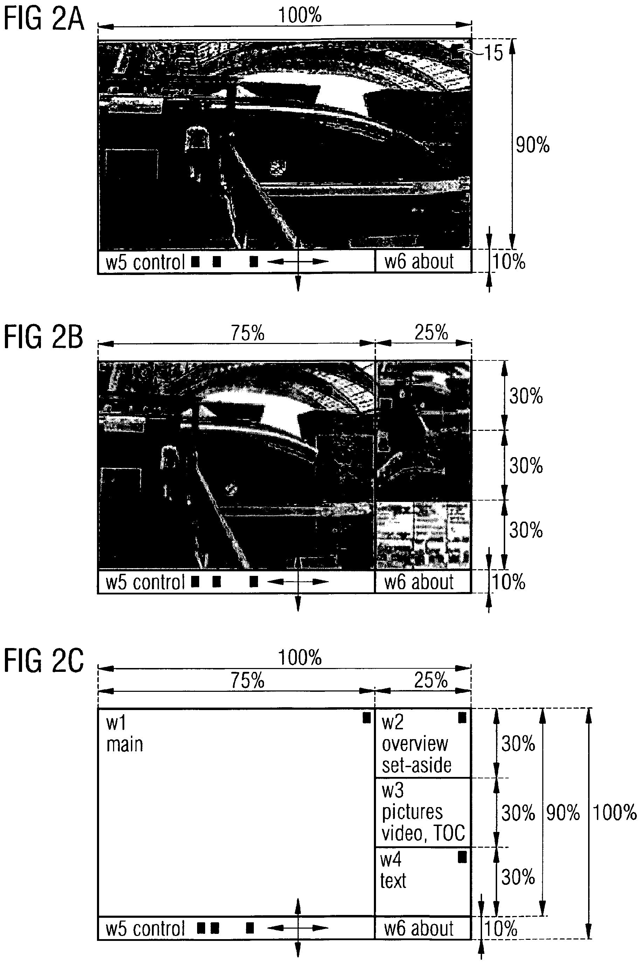

Figs. 2a to 2c show a possible screen layout as it can be used for displaying a movie and optionally additional information on a screen. The user is watching a movie and is triggered in a discrete way when additional information is available, e.g. via a small red square indicator 15 in one of the corners as indicated in Fig. 2a. The user can then press the "red button" on the remote control to split the screen in different sub-windows as indicated in Fig. 2b. Navigation through the different action zones is then possible from the main window w1 or from the smaller navigation window w2, the set-aside window, which can remain fixed even when continuing the main movie. It is always possible to enlarge this set-aside window again to the main window which then stops the main program.

The screen layout of Fig. 2 is adapted for media consumption via digital supported TV and the interaction between a plurality of windows. Therein, a time/space-shifted access to additional information is possible. A typical screen layout may comprise the following "6 screen concept" as indicated in Fig. 2c:
a) a main screen for the main movie content;
b) three sub-screens for i) reduced size screen of main content screen as overview and navigation help; ii) picture, small digital media, graphics; and iii) textual content screen for explanations, descriptions, etc.
c) a control screen to start/stop, activate/deactivate additional information presentation;
d) a small "about screen" for company name or company logo.

For the location of the different screens, a "left to right" and a "top to bottom" topology is used in this description. However, this can be adapted in function of the habits used in different countries. The main content is placed on the left top side. Additional content is placed on the right side such as:
- a "set-aside window" which allows to make a snapshot of the current main screen and make it available in a smaller screen as kind of reference screen;
- a "table of content" or a picture/video window to show additional media content;
- a "textual description screen".

The control information is placed at the bottom. All screens are horizontal oriented as is the case with the human eyes.

The screen layout takes care about following dimensions for SDTV (Standard Television) and HDTV (High Definition Television) for 16:9 or 16:10 display formats.

w2 is 1/3 of w1.

Each window may be expressed in a certain percentage (75 %, 25 %, 30 %, 10 %);
The approach may be usable also in a www-browser environment.

This concept allows additional dynamics for the main content by making use of following elements:

### - hypermedia/expert media

The "main window" presents the main content such as the movie which contains certain action zones which are related to additional information.

### - "short/long-term" memory aspects

To allow the end user to take care about the additional information at a later moment in time, a snapshot of the main window can be placed aside as further reference. The main window can be seen as a "short-term memory" while the "set-aside window" is related to a "long-term kind of memory". The action zones are usable in both windows and the reduced set-aside window can always be enlarged again in the main window.

### - associative references

The "picture/video" window allows the binding of a picture with certain information and is based on the information processing in the human brains. For this reason, this window is placed central between window "w2" and "w4".

### - navigation system

Two kinds of navigation possibilities are provided, i.e. the possibility to reduce a snapshot of the main window to the set-aside window and vice versa and the possibility of activate a "table of content" via the control screen.

In the following a possible implementation of the method according to an embodiment of the invention is presented.

The main broadcast A/V content consists of different "frames" (e.g. 25 or 30 fps) which can be "tagged" at certain locations via e.g. a DVB defined method for digital content provided by dependent service providers working together with the main content providers. This "tag" can also be determined via a "tag picture" method as described above.

The additional content including additional information related to certain frames of the main content is distributed towards the end-user and stored on a media (in a local end-user device or at a remote network location) before the consumption of the main content. The information is stored in a file or a database system which is referenced by the "tag".

It contains both meta-data and additional content data.

### a) Meta-data.

Tag, frame picture (for the main window), reduced frame picture (for the set-aside) window, valid from-to information, service provider id of the additional content, coordinates for the action zones, opacity factor and color for the action zones, event actions for the action zones, pre/actual/post indication, watcher rules (e.g. delete info when swap to another channel, additional info only when watching from start of movie, ...), etc.

### b) Additional content.

Each action zone has an event action which refers to the additional content which has to be made available in a certain window and can contain any multimedia data item such as still picture, graphics, painting, video, audio, text, etc.

The system can be configured for different profiles to indicate the system actions to be taken when a tagged information element is detected. It defines the kind of CPIS allowed by the end-user. For each sub-window, the display screen can be configured (i.e. the main TV set or another external device such as a PDA, smart-phone, notebook, etc.).

The CPIS can be configured from "low" to 'high" indicating the kind of visual and manual interaction of the user. The "tag" can be configured to none, automatic or manual. The "highlights" and the "sub-windows" can be configured to on or off. This gives a combination of 7 different CPIS states.
CPIS 0: Tag action is none.
   This is the normal viewing of the main content. No additional information can be consumed. No visual and manual interaction of the user.
CPIS 1: No sub-windows, no highlights, Tag action is automatic.
   For every "tag", a discrete indication is given to the user (small indication on the screen or a discrete audible tone as configured by the user). The tag is automatically stored in a "tag context list" for delayed consumption and the main content continues without any interruption.
CPIS 2: No sub-windows, no highlights, Tag action is manual. In manual mode, the user can determine if the tag has to be stored in the "tag context list". When viewing the main content, the user is given the option to indicate the interest in certain tagged locations. An explicit user action is required to store the tag. The main content continues without any interruption.
CPIS 3: No sub-windows, highlights, Tag action is automatic. Each tag is automatically stored as for CPIS 1, but in addition, the action zones are also highlighted on the main screen to give the user an indication of the "regions of interest".
CPIS 4: No sub-windows, highlights, tag action is manual. The action zones are highlighted as an extra indication for the user to indicate his interest to store this tag in the "tag context list".
CPIS 5: sub-windows, highlights, Tag action is automatic. Every "tag" is automatically stored in the "tag context list", the sub-windows are automatically opened and the tagged frame is provided with highlights of the activity zones in the set-aside window. The other sub-windows are also provided with the appropriate data. The main content continues without any interruption.
CPIS 6: sub-windows, highlights, Tag action is manual. The storage of the tag in the tag context list and the opening of the sub-windows is only done after an explicit user action. The main content continues without any interruption.

At any moment in time, the user is able to select the "set-aside" window and navigate through the different action zones which then results in updates of the other sub-windows. When the "set-aside" window or one of the other sub-windows is enlarged to the main window, the main content is paused and the time-shift mode is activated. When the "set-aside" window is enlarged, navigation through the different action zones is then also possible in the main window.

In order to recapitulate the above-described embodiments and aspects of the present invention it can be summarized: The intention is to avoid overloading the user with additional information and distracting him from the main content of a movie. The present invention may start from a normal screen format natively used only for the main movie program. When additional information is available for a certain program frame, an indication is given to the user in visible or audible way. The user has then the option to:
1) stop/pause the current movie program and consume the additional information;
2) configure an automatic "set-aside" of the additional content for consumption at a later moment in time (time shifting);
3) have a "quick look" and decide to consume this information later, i.e. a manual "set-aside" or discard the information and continue with the main program;
4) avoid a disruption in the main program but allow the presentation and navigation of the additional information in separate windows while the main program continues. The different sub-windows for the additional content and the main window all have a 4:3 screen format combined together without overlap on a 16:9 or 16:10 screen format;
5) the navigation to the additional information is done via "action zones" indicating certain parts of the content of the main program for a specific frame. These "action zones" can be used on the main content window and also on the smaller "set-aside" window.

The additional content windows may have a format which could also be transferred to a more limited, personalized device so that the personal consumption of additional info does not disrupt the other watchers of the main TV screen.

With the method or the apparatus according to the invention, the following advantages may be obtained:
- a flexible distribution in time and space for the access of additional information via a "set-aside" concept;
- the ability to transfer the additional information also to other output devices;
- a screen layout based on 16:9, 16:10 and 4:3 format;
- different specific organized windows for different purposes;
- allow independent service providers for the additional content contribution.
- Both the main content provider and an independent service provider can provide the additional info. For digital TV formats, a tagging" concept exists which can be used to indicate the location in the movie where additional information is made available. However, this method can't be used by independent service providers, for analog TV channels and for existing DVDs. As such, this invention defines another method to bring more flexibility for added content so that more people are able to enjoy this new benefit, e.g. additional info which allows blind people to experience a TV program.

From the above description it is evident for one skilled in the art that the concept underlying the present invention is not limited to visual presentation of information but both, the main information and the additional information, can be presented visually and/or in an audible manner.

Finally, it should be noted that the terms "comprising", "including", etc. do not exclude other elements or steps and the "a" or "an" does not exclude a plurality. Also elements described in association with different embodiments may be combined. It should also be noted that reference signs in the claims should not be construed as limiting the scope of the claims.

### List of reference signs:

1 display apparatus
3 screen
5 control unit
7 receiver
9 memory
11 first input port
13 second input port
15 indicator
17 remote control
19 infrared receiver
21 external output device
23 output port

## Claims

1. Method for providing flexible access to additional information to a visual stream of main information provided via TV broadcast channels, Internet, DVD media or video on demand, comprising:
displaying the visual stream of main information on a TV screen (3);
determining whether additional information is available for a specific portion of the visual stream of main information currently displayed,
wherein the specific portion of the visual stream of main information is a time portion of the visual stream of main information or a spatial portion of the visual stream of main information and
wherein the additional information is any kind of information to be provided to a user when viewing the visual stream of main information;
providing an indicator (15) when additional information is available for the specific portion of the visual stream of main information;
based on the user's choice concerning a spatial provision of the additional information on the TV screen or on other output devices (21) or concerning a temporal provision of the additional information, presenting the additional information immediately, storing the additional information for later use or discarding the additional information;
providing a plurality of windows on the TV screen (3) comprising a main window (w1) and one or more sub-windows, the sub-windows comprising a set-aside window (w2),
the main window (w1) presenting the visual stream of main information,
the set-aside window (w2) being smaller than the main window (w1) and allowing to make a snapshot of a current main window (w1) available in the set-aside window (w2) as a reference to allow the user to take care about the additional information at a later moment in time;
wherein the sub-windows further comprise additional content windows (w3, w4) which comprise a table of content window or picture/video window (w3) to show additional media content and a textual content window (w4) ;
wherein the additional content windows (w3, w4) have a format transferrable to a personalized other output device (21) being one of a PDA, smart-phone, and notebook;
wherein, when one of the sub-windows (w2, w3, w4) which is presented on the TV screen is enlarged, the visual stream of main information is paused and a time-shift mode is activated.

2. Method according to claim 1, wherein
the table of contents or picture/video window (w3) allows a binding of a picture with certain information as associative reference.

3. Method according to claim 1 or 2, wherein the plurality comprises a control window (w5) to start/stop, activate/deactivate additional information presentation and to activate a table of content.

4. Method according to any of the preceding claims,
wherein upon the user's choice for presenting the additional information immediately, the additional information is displayed in a predetermined portion of the screen.

5. Method of claim 4, wherein the screen is divided in subdivisions and wherein the screen size of the visual stream of main information is resized to be displayed in one subdivision and the additional information is displayed in at least one other subdivision.

6. Method according to any of the preceding claims,
wherein upon the user's choice for presenting the additional information immediately, the additional information is output on a separate output device (21).

7. Method according to any of the preceding claims,
wherein a first data signal providing the visual stream of main information and a second data signal providing the additional information are provided via separate supply channels.

8. Method according to claim 7, wherein the first data signal is an analog signal and wherein the second data signal further comprises image data of an image of the visual stream of main information for which image additional data is to be provided and wherein the step of determining whether additional information is available for a specific portion of the visual stream of main information currently displayed includes comparing the first data signal of the visual stream of main information currently displayed with the image data included in the second data signal.

9. Method according to any of the preceding claims,
wherein the visual stream of main information contains action zones which are related to the additional information,
wherein the action zones are usable in the main window (w1) and the set-aside window (w2),
wherein navigation to the additional information is done via the action zones.

10. Display apparatus adapted to perform a method according to one of claims 1 to 9.

11. Display apparatus according to claim 10, including a screen (3) and a receiver (7) and wherein the receiver is adapted to receive both a visual stream of main information data signal and an additional information data signal.

12. Display apparatus according to claim 11, wherein the receiver comprises separate ports (11, 13) for receiving the visual stream of main information data signal and the additional information data signal.

13. Display apparatus according to claim 10, 11 or 12, further comprising a data output port (23) for transmitting the additional information to an external output device (21).

14. Display apparatus according to any of claims 10 to 13, further comprising an input device (17) for receiving the users choice concerning the temporal or spatial provision of additional information.

## Patentansprüche

1. Verfahren zur Bereitstellung von flexiblem Zugang zu Zusatzinformation zu einem visuellen Strom von Hauptinformation, der über TV-Rundfunkkanäle, Internet, DVD-Medien oder Video on Demand bereitgestellt wird, umfassend:
Anzeigen des visuellen Stroms von Hauptinformation auf einem TV-Bildschirm (3);
Bestimmen, ob Zusatzinformation für einen bestimmten Teil des visuellen Stroms von Hauptinformation, der aktuell angezeigt wird, verfügbar ist,
wobei der bestimmte Teil des visuellen Stroms von Hauptinformation ein Zeitabschnitt des visuellen Stroms von Hauptinformation oder ein räumlicher Teil des visuellen Stroms von Hauptinformation ist, und wobei die Zusatzinformation eine beliebige Art von Information ist, die einem Benutzer bereitzustellen ist, wenn er den visuellen Strom von Hauptinformation betrachtet;
Bereitstellen eines Indikators (15), wenn Zusatzinformation für den bestimmten Teil des visuellen Stroms von Hauptinformation verfügbar ist;
auf Grundlage der Wahl des Benutzers hinsichtlich einer räumlichen Bereitstellung der Zusatzinformation auf dem TV-Bildschirm oder auf anderen Ausgabevorrichtungen (21) oder hinsichtlich einer zeitlichen Bereitstellung der Zusatzinformation, unmittelbares Präsentieren der Zusatzinformation, Speichern der Zusatzinformation zur späteren Verwendung oder Verwerfen der Zusatzinformation;
Bereitstellen einer Vielzahl an Fenstern auf dem TV-Bildschirm (3) umfassend ein Hauptfenster (w1) und ein Unterfenster oder mehrere Unterfenster, wobei die Unterfenster ein Beiseitelegefenster (w2) umfassen,
wobei das Hauptfenster (w1) den visuellen Strom von Hauptinformation präsentiert,
wobei das Beiseitelegefenster (w2) kleiner als das Hauptfenster (w1) ist und ermöglicht, eine Momentaufnahme eines aktuellen Hauptfensters (w1), die in dem Beiseitelegefenster (w2) als eine Referenz verfügbar ist, zu machen, um dem Benutzer zu ermöglichen, die Zusatzinformation zu einem späteren Zeitpunkt zu berücksichtigen;
wobei die Unterfenster ferner Zusatzinhaltsfenster (w3, w4) umfassen, welche ein Inhaltsverzeichnisfenster oder Bild-/Video-Fenster (w3), um zusätzlichen Medieninhalt zu zeigen, und ein Textinhaltsfenster (w4) umfassen;
wobei die Zusatzinhaltsfenster (w3, w4) ein Format aufweisen, das zu einer personalisierten anderen Ausgabevorrichtung (21) übertragen werden kann, die eine eines PDA, Smartphones und Notebooks ist;
wobei, wenn eines der Unterfenster (w2, w3, w4), welches auf dem TV-Bildschirm präsentiert wird, vergrößert wird, der visuelle Strom von Hauptinformation pausiert wird und ein Zeitverschiebungsmodus aktiviert wird.

2. Verfahren nach Anspruch 1, wobei das Inhaltsverzeichnis- oder Bild-/Video-Fenster (w3) eine Verknüpfung eines Bilds mit bestimmten Informationen als assoziative Referenz ermöglicht.

3. Verfahren nach Anspruch 1 oder 2, wobei die Vielzahl ein Steuerfenster (w5) zum Starten/Stoppen, Aktivieren/Deaktivieren von Zusatzinformationspräsentation und zum Aktivieren eines Inhaltsverzeichnisses umfasst.

4. Verfahren nach einem der vorherigen Ansprüche, wobei nach der Wahl des Benutzers zum unmittelbaren Präsentieren der Zusatzinformation die Zusatzinformation in einem vorbestimmten Teil des Bildschirms angezeigt wird.

5. Verfahren nach Anspruch 4, wobei der Bildschirm in Unterabteilungen unterteilt wird, und wobei die Bildschirmgröße des visuellen Stroms von Hauptinformation derart geändert wird, dass er in einer Unterabteilung angezeigt wird und die Zusatzinformation in mindestens einer anderen Unterabteilung angezeigt wird.

6. Verfahren nach einem der vorherigen Ansprüche, wobei nach der Wahl des Benutzers zum unmittelbaren Präsentieren der Zusatzinformation die Zusatzinformation auf einer separaten Ausgabevorrichtung (21) ausgegeben wird.

7. Verfahren nach einem der vorherigen Ansprüche, wobei ein erstes Datensignal, das den visuellen Strom von Hauptinformation bereitstellt, und ein zweites Datensignal, das die Zusatzinformation bereitstellt, über separate Versorgungskanäle bereitgestellt werden.

8. Verfahren nach Anspruch 7, wobei das erste Datensignal ein analoges Signal ist, und wobei das zweite Datensignal ferner Bilddaten eines Bilds des visuellen Stroms von Hauptinformation aufweist, für welches Bild Zusatzdaten bereitzustellen sind, und wobei der Schritt des Bestimmens, ob Zusatzinformation für einen bestimmten Teil des visuellen Stroms von Hauptinformation, der aktuell angezeigt wird, verfügbar ist, das Vergleichen des ersten Datensignals des visuellen Stroms von Hauptinformation, der aktuell angezeigt wird, mit den Bilddaten, die in dem zweiten Datensignal enthalten sind, beinhaltet.

9. Verfahren nach einem der vorherigen Ansprüche, wobei der visuelle Strom von Hauptinformation Aktionszonen enthält, welche sich auf die Zusatzinformation beziehen,
wobei die Aktionszonen in dem Hauptfenster (w1) und dem Beiseitelegefenster (w2) verwendet werden können, wobei die Navigation zu der Zusatzinformation über die Aktionszonen durchgeführt wird.

10. Anzeigevorrichtung, die eingerichtet ist, um ein Verfahren nach einem der Ansprüche 1 bis 9 durchzuführen.

11. Anzeigevorrichtung nach Anspruch 10, die einen Bildschirm (3) und einen Empfänger (7) aufweist, und wobei der Empfänger eingerichtet ist, um sowohl einen visuellen Strom eines Hauptinformationsdatensignals als auch ein Zusatzinformationsdatensignal zu empfangen.

12. Anzeigevorrichtung nach Anspruch 11, wobei der Empfänger separate Anschlüsse (11, 13) zum Empfangen des visuellen Stroms des Hauptinformationsdatensignals und des Zusatzinformationsdatensignals aufweist.

13. Anzeigevorrichtung nach Anspruch 10, 11 oder 12, die ferner einen Datenausgangsanschluss (23) zum Übertragen der Zusatzinformation zu einer externen Ausgabevorrichtung (21) aufweist.

14. Anzeigevorrichtung nach einem der Ansprüche 10 bis 13, die ferner eine Eingabevorrichtung (17) zum Erhalten der Wahl des Benutzers hinsichtlich der zeitlichen oder räumlichen Bereitstellung von Zusatzinformation aufweist.

## Revendications

1. Un procédé de fourniture d'un accès flexible à des informations additionnelles à un flux visuel d'informations principales fournies par l'intermédiaire de canaux de télédiffusion, d'Internet, de supports DVD ou de vidéo à la demande, comprenant :
l'affichage du flux visuel d'informations principales sur un écran de télévision (3),
la détermination si des informations additionnelles sont disponibles pour une partie spécifique du flux visuel d'informations principales actuellement affiché,
la partie spécifique du flux visuel d'informations principales étant une partie temporelle du flux visuel d'informations principales ou une partie spatiale du flux visuel d'informations principales et
les informations additionnelles étant tout type d'informations à fournir à un utilisateur lors du visionnement du flux visuel d'informations principales,
la fourniture d'un indicateur (15) lorsque des informations additionnelles sont disponibles pour la partie spécifique du flux visuel d'informations principales,
en fonction du choix de l'utilisateur concernant une fourniture spatiale des informations additionnelles sur l'écran de télévision ou sur d'autres dispositifs de sortie (21) ou concernant une fourniture temporelle des informations additionnelles, la présentation immédiate des informations additionnelles, la conservation en mémoire des informations additionnelles pour une utilisation ultérieure ou le rejet des informations additionnelles,
la fourniture d'une pluralité de fenêtres sur l'écran de télévision (3) comprenant une fenêtre principale (w1) et une ou plusieurs sous-fenêtres, les sous-fenêtres comprenant une fenêtre de mise en réserve (w2),
la fenêtre principale (w1) présentant le flux visuel d'informations principales,
la fenêtre de mise en réserve (w2) étant plus petite que la fenêtre principale (w1) et permettant de prendre un instantané d'une fenêtre principale courante (w1) disponible dans la fenêtre de mise en réserve (w2) en tant que référence de façon à permettre à l'utilisateur de s'occuper des informations additionnelles à un moment ultérieur,
les sous-fenêtres comprenant en outre des fenêtres de contenu additionnelles (w3, w4) qui comprennent une table de fenêtres de contenu ou de fenêtres d'images/vidéo (w3) destinées à montrer des contenus multimédias additionnels et une fenêtre de contenu textuel (w4),
les fenêtres de contenu additionnelles (w3, w4) possédant un format transférable vers un autre dispositif de sortie personnalisé (21) qui est un dispositif parmi un PDA, un téléphone intelligent et un ordinateur bloc-notes,
dans lequel, lorsqu'une des sous-fenêtres (w2, w3, w4) qui est générée sur l'écran de télévision est agrandie, le flux visuel d'informations principales est mis en pause et un mode à décalage temporel est activé.

2. Le procédé selon la revendication 1, dans lequel la table de contenus ou la fenêtre d'images/vidéo (w3) permet une liaison d'une image avec certaines informations en tant que référence associative.

3. Le procédé selon la revendication 1 ou 2, dans lequel la pluralité comprend une fenêtre de commande (w5) destinée à démarrer/arrêter, activer/désactiver une présentation d'informations additionnelles et à activer une table de contenus.

4. Le procédé selon l'une quelconque des revendications précédentes,
dans lequel, en cas de choix par l'utilisateur de la présentation immédiate des informations additionnelles, les informations additionnelles sont affichées dans une partie prédéterminée de l'écran.

5. Le procédé selon la revendication 4, dans lequel l'écran est divisé en subdivisions et dans lequel la taille de l'écran du flux visuel d'informations principales est redimensionnée de façon à être affiché dans une subdivision et les informations additionnelles sont affichées dans au moins une autre subdivision.

6. Le procédé selon l'une quelconque des revendications précédentes, dans lequel, en cas de choix par l'utilisateur de la présentation immédiate des informations additionnelles, les informations additionnelles sont produites en sortie sur un dispositif de sortie distinct (21).

7. Le procédé selon l'une quelconque des revendications précédentes, dans lequel un premier signal de données fournissant le flux visuel d'informations principales et un deuxième signal de données fournissant les informations additionnelles sont fournis par l'intermédiaire de canaux d'alimentation distincts.

8. Le procédé selon la revendication 7, dans lequel le premier signal de données est un signal analogique et dans lequel le deuxième signal de données comprend en outre des données d'image d'une image du flux visuel d'informations principales pour laquelle des données d'image additionnelles sont à fournir et dans lequel l'étape de détermination si des informations additionnelles sont disponibles pour une partie spécifique du flux visuel d'informations principales actuellement affiché comprend la comparaison du premier signal de données du flux visuel d'informations principales actuellement affiché aux données d'image incluses dans le deuxième signal de données.

9. Le procédé selon l'une quelconque des revendications précédentes,
dans lequel le flux visuel d'informations principales contient des zones d'action qui sont reliées aux informations additionnelles,
dans lequel les zones d'action sont utilisables dans la fenêtre principale (w1) et la fenêtre de mise en réserve (w2),
dans lequel une navigation vers les informations additionnelles est effectuée par l'intermédiaire des zones d'action.

10. Un appareil d'affichage adapté de façon à exécuter un procédé selon l'une quelconque des revendications 1 à 9.

11. L'appareil d'affichage selon la revendication 10, comprenant un écran (3) et un récepteur (7) et dans lequel le récepteur est adapté de façon à recevoir à la fois un flux visuel d'un signal de données d'informations principales et un signal de données d'informations additionnelles.

12. L'appareil d'affichage selon la revendication 11, dans lequel le récepteur comprend des ports séparés (11, 13) pour la réception du flux visuel du signal de données d'informations principales et du signal de données d'informations additionnelles.

13. L'appareil d'affichage selon la revendication 10, 11 ou 12, comprenant en outre une port de production en sortie de données (23) destiné à la transmission des informations additionnelles à un dispositif de sortie externe (21).

14. L'appareil d'affichage selon l'une quelconque des revendications 10 à 13, comprenant en outre un dispositif d'entrée (17) destiné à la réception du choix de l'utilisateur concernant la fourniture spatiale ou temporelle d'informations additionnelles.
